# DEMANDE DE BREVET EUROPEEN

(11) **EP 1 378 172 A1**
(43) Date de publication de la demande: **07.01.2004**
(21) Numéro de dépôt: 03291614.0
(22) Date de dépôt: 01.07.2003
(51) Int. Cl.: A23B 7/154, A23B 7/157

(54) **Procédé et utilisation d'une solution d'acide peracetique pour le lavage des produits végétaux de quatrième gamme**

(30) Priorité: 03.07.2002 FR 0208329
(71) Demandeur: SOCIETE D'EXPLOITATION DE PRODUITS POUR LES INDUSTRIES CHIMIQUES, S.E.P.P.I.C., 75321 Paris Cédex 07 (FR)
(72) Inventeur: Gamet, Jean-Claude, 71460 Saint Martin du Tartre (FR); Le Rouzic, Daniel, 95120 Ermont (FR)
(74) Mandataire: Conan, Philippe Claude

(57) **Abrégé**

Procédé de lavage de produits végétaux destinés à la consommation humaine ou animale, caractérisé en ce que ledit produit est mis en contact avec une solution aqueuse d'acide peracétique. Variante du procédé, selon laquelle la teneur en acide peracétique dans la solution aqueuse de lavage, est régulée de façon continue dans le temps, au moyen d'un dispositif permettant, d'en ajuster automatiquement la concentration.

## Description

L'invention se rapporte à la désinfection de produits alimentaires destinés à être ensachés.

Les produits alimentaires de quatrième gamme, qui consistent essentiellement en des produits végétaux vivants donc non stabilisés, comme les légumes ou les salades, sont conditionnés en unités ménagères ou collectives, crus, frais, prêts à l'emploi, après avoir généralement fait l'objet au moins d'une opération touchant à leur intégrité telle qu'un épluchage ou un coupage. Or, ces produits doivent répondre à trois exigences principales :
- la matière première doit être de qualité tant d'un point de vue physiologique que microbiologique,
- elle doit avoir été efficacement désinfectée pour en assurer sa bonne conservation et,
- la chaîne du froid doit être rigoureusement maintenue jusqu'au consommateur afin de ralentir, tant son évolution physiologique que la croissance de développements microbiens inhérents à sa condition d'être vivant.

Aujourd'hui, le seul traitement de préservation existant, consiste en une désinfection par lavage à l'eau avec barbotage de chlore gazeux, des végétaux, qui reste partielle et qui ne peut en aucun cas suffire à éliminer tous les germes présents, comme le font, par exemple, apparaître les résultats consignés dans le tableau suivant, relatifs au taux de flore aérobie mésophile présente dans les salades, avant et après lavage à l'eau.

| | |
|---|---|
| Taux de flore aérobie mésophile dans la matière première avant lavage à l'eau, | Taux de flore aérobie mésophile dans la matière première après lavage à l'eau. |
| 10⁶ à 10⁷ germes / g | 10⁴ à 10⁵ germes / g |

De plus l'eau de lavage contenant des chloramines du fait de ce barbotage de chlore, ne peut être recyclée.

La demanderesse a cherché à mettre au point un procédé de désinfection qui n'ait pas les inconvénients précités. Elle a trouvé que, contrairement à toute attente, l'on pouvait utiliser des solutions aqueuses d'acide peracétique sans détériorer les produits en cause, et ceci malgré la présence de peroxyde d'hydrogène inhérente à de telles solutions.

C'est pourquoi l'invention a pour objet un procédé de lavage de produits végétaux destinés à la consommation humaine ou animale, caractérisé en ce que ledit produit est mis en contact avec une solution aqueuse d'acide peracétique.

Comme produit végétal destiné à la consommation humaine ou animale, on désigne plus particulièrement un produit dit "de quatrième gamme", c'est à dire un produit végétal destiné à la consommation humaine et susceptible d'être conditionné cru, frais et prêt à l'emploi. Comme produit appartenant à cette catégorie, il y a plus particulièrement, les légumes, qu'ils soient entiers coupés ou râpés ou les salades.

Selon un premier aspect particulier de la présente invention, la solution aqueuse d'acide peracétique mise en contact avec le produit à laver, comprend jusqu'à 0,01 % et de préférence jusqu'à 0,005 % en poids d'acide peracétique, jusqu'à 0,01% en poids et de préférence jusqu'à 0,005 % en poids de peroxyde d'hydrogène et jusqu'à 0,1 % en poids et de préférence jusqu'à 0,05 % en poids d'acide acétique.

Le procédé de lavage tel que décrit ci-dessus, est généralement mis en oeuvre par immersion du produit à laver dans ladite solution. Afin d'assurer un trempage homogène du produit à laver, l'eau de lavage est soumise à agitation

Selon un aspect particulier du procédé tel que défini précédemment, l'étape de lavage avec ladite solution est suivie d'une étape de rinçage à l'eau du produit.

L'eau de rinçage utilisée, est d'une qualité qui la rend apte à la consommation humaine.

Selon un autre aspect particulier du procédé tel que défini ci-dessus, l'étape de rinçage est suivie d'une étape de séchage du produit.

Le séchage dudit produit est en général effectué par centrifugation.

Le procédé tel que défini précédemment, est mis en oeuvre à une température généralement inférieure à 20°C et de préférence à une température autour de 4°C.

Le temps de trempage et / ou de contact de la solution aqueuse d'acide peracétique avec ledit produit de quatrième gamme, est généralement inférieur à 5 minutes.

L'invention a aussi pour objet une variante du procédé tel que défini précédemment, dans lequel la teneur en acide peracétique dans la solution aqueuse de lavage, est régulée de façon continue dans le temps, au moyen d'un dispositif permettant, d'en ajuster automatiquement la concentration.

Comme exemple dispositif approprié à cette régulation, il y a de préférence celui commercialisé sous le nom BACTIREGUL™, et décrit dans la publication internationale WO 91/14172.

Selon un aspect particulier de la variante telle que définie précédemment, lorsque la concentration en acide peracétique dans la solution de lavage est inférieure à une concentration prédéterminée, elle est ajustée par incorporation d'une quantité suffisante d'une solution aqueuse prête à l'emploi d'acide peracétique comprenant entre 5 % et 15 % en poids et de préférence, entre 9 % et 10 % en poids, d'acide peracétique, entre 5 % et 15 % en poids et de préférence entre 4 % et 6 % en poids, de peroxyde d'hydrogène et entre 45 % et 50 % en poids et, de préférence, entre 46 % et 48 % en poids d'acide acétique.

Selon un dernier aspect de la présente invention, celle a pour objet l'utilisation d'une solution aqueuse prête à l'emploi d'acide peracétique, comprenant en outre de l'acide acétique et du peroxyde d'hydrogène dans laquelle le rapport pondéral :
quantité d'acide acétique sur quantité de peroxyde d'hydrogène, est compris entre 5 et 15 et de préférence entre 7 et 12, pour laver des produits de quatrième gamme.

L'exemple suivant illustre l'invention sans toutefois la limiter. Il met en évidence le fait que parmi les alternatives au chlore, l'acide peracétique présente les principaux avantages suivants :
- une simplicité d'emploi et de mise en oeuvre ;
- une efficacité désinfectante et anti-pucerons ,
- il n'y pas de modification des qualités organoleptiques des produits,
- il n'y a aucune formation de sous produits toxiques.

### Principe de la méthode expérimentale

L'analyseur industriel, le Bactiregul **™,** utilisé pour la régulation de la concentration de l'acide peracétique dans la solution de lavage, fonctionne en mesurant par colorimétrie, l'intensité de la coloration induite par l'ajout d'ions iodure dans la solution à analyser, cette intensité étant proportionnelle à la concentration en acide peracétique, donc en désinfectant. Lorsque le système est installé en ligne, comme dans la présente application, on utilise des pompes péristaltiques pour diluer l'échantillon et ajouter en permanence du réactif au flux d'échantillon selon le rapport de mélange approprié. Le mélange s'écoule ensuite à travers la cuve de mesure, dans laquelle s'effectue la mesure d'absorption de la lumière. Le signal mesuré est alors traité électroniquement, dans l'adaptateur photométrique pour donner un signal proportionnel à la concentration en désinfectant.

Dans l'essai considéré, le BACTIREGUL™ a été réglé pour mesurer des concentrations d'acide peracétique de 0 à 50 ppm, la mesure s'effectuant toutes les 100 secondes. La dose utile d'acide peracétique, c'est à dire celle permettant d'arriver de façon permanente à un résultat satisfaisant en terme de qualité microbiologique, a été préalablement déterminée par des essais comparatifs avec le chlore gazeux dont la dose d'application industrielle est bien connue. Les essais ont porté d'une part sur l'abattement bactérien (Flore Aérobie Mésophile Totale), traduisant l'efficacité désinfectante, et d'autre part sur les effets secondaires (aspect, qualités organoleptiques), jusqu'à la date limite de conservation du produit pour les deux critères de sélection. Différentes variétés de salades ont été testées : laitue, jeunes pousses, gourmande.

Le résultat de cette étude préliminaire a permis de déterminer qu'une dose utile en acide peracétique de 16 ppm ± 1 ppm, dans la solution de lavage pour un temps de contact de 1 minute à la température de l'eau de lavage de 4°C, est équivalente à 30 ppm de chlore actif.

Cette dose utile étant fixée, on a procédé à un essai à l'échelle industrielle dans les conditions suivantes :

La ligne de production était un bac de lavage en inox alimenté en eau de forage à un débit de 3 m³ / h, renouvelé complètement toutes les 30 minutes.

Les mesures ont été effectuées toutes les 100 secondes, dans une plage comprise entre 0 ppm et 50 ppm avec une incertitude absolue de ± 1 ppm ;

Lorsque la mesure atteignait un seuil haut égal à 17 ppm, cela provoquait l'arrêt de la pompe doseuse qui alimentait le bac de lavage en Bactipal™ R à un débit de 112 l/h.

Le BACTIPAL™ R est une solution aqueuse d'acide peracétique contenant entre 9 % et 10 %en poids d'acide peracétique, entre 4 et 6 % en poids de peroxyde d'hydrogène et entre 46 % et 48 % en poids d'acide acétique.

Lorsque la mesure atteignait un seuil bas égal à 15 ppm, cela provoquait la mise en marche de cette pompe doseuse.
Des essais de trois heures chacun, ont été réalisés avec des échantillons de trois types de salades :
- de la laitue
- un mélange (frisée, mâche, rouge.....)
- un mélange jeunes pousses préalablement préparés pour être lavées.

La quantité globale traitée pour chaque essai est 450 kg de produit.

A l'expiration de la limite de conservation, aucune modification des qualités organoleptiques des produits traités n'a été observée.

Les analyses des produits finis n'ont pas permis de mettre en évidence la présence de peroxydes (< 0,065 mg/kg de salades).

## Revendications

1. Procédé de lavage de produits végétaux destinés à la consommation humaine ou animale, **caractérisé en ce que** ledit produit est mis en contact avec une solution aqueuse d'acide peracétique.

2. Procédé tel que défini à la revendication 1, **caractérisé en ce que** le produit est choisi parmi les légumes qu'ils soient entiers coupés ou râpés ou les salades,

3. Procédé tel que défini à l'une des revendications 1 ou 2, dans lequel la solution aqueuse d'acide peracétique mise en contact avec le produit à laver, comprend jusqu'à 0,01 % et de préférence jusqu'à 0,005 % en poids d'acide peracétique.

4. Procédé tel que défini à l'une des revendications 1 à 3, dans lequel la solution aqueuse d'acide peracétique mise en contact avec le produit à laver, comprend au moins 1% en poids et au plus 10% en poids de peroxyde d'hydrogène.

5. Procédé tel que défini à l'une des revendications 1 à 4, dans lequel la solution aqueuse d'acide peracétique mise en contact avec le produit à laver, comprend et au plus 15 % d'acide acétique.

6. Procédé tel que défini à l'une des revendications 1 à 5, dans lequel l'étape de lavage est suivie d'une étape de rinçage à l'eau du produit.

7. Procédé tel que défini à la revendication 6, dans lequel l'étape de rinçage est suivie d'une étape de séchage du produit.

8. Procédé tel que défini à l'une des revendications 1 à 7, selon laquelle la teneur en acide peracétique dans la solution aqueuse de lavage, est régulée de façon continue dans le temps, au moyen d'un dispositif permettant, d'en ajuster la concentration.

9. Procédé tel que défini à la revendication 8, selon laquelle lorsque la concentration en acide peracétique dans la solution de lavage est inférieure à une valeur prédéterminée, elle est ajustée par incorporation d'une quantité suffisante d'une solution aqueuse prête à l'emploi d'acide peracétique comprenant entre 5 % et 15 % en poids et de préférence, entre 9 % et 10 % en poids, d'acide peracétique, entre 5 % et 15 % en poids et de préférence entre 4 % et 6 % en poids, de peroxyde d'hydrogène et entre 45 % et 50 % en poids et, de préférence, entre 46 % et 48 % en poids d'acide acétique.

10. Utilisation d'une solution aqueuse prête à l'emploi d'acide peracétique, comprenant en outre de l'acide acétique et du peroxyde d'hydrogène dans laquelle le rapport pondéral :
quantité d'acide acétique sur quantité de peroxyde d'hydrogène, est compris entre 5 et 15 et de préférence entre 7 et 12, pour laver des produits destinés à la consommation humaine ou animale dits de quatrième gamme.
